# EUROPEAN PATENT SPECIFICATION

(11) **EP 0 585 072 B1**
(45) Date of publication and mention of the grant of the patent: **29.12.1997**
(21) Application number: 93306606.0
(22) Date of filing: 20.08.1993
(51) Int. Cl.: H01M 6/18

(54) **Ion-conductive polymer electrolyte**
Ionenleitender Polymerelektrolyt
Electrolyte polymère à conduction ionique

(30) Priority: 27.08.1992 JP 228516/92; 27.08.1992 JP 228518/92; 14.09.1992 JP 244692/92
(43) Date of publication of application: 02.03.1994
(73) Proprietor: DAI-ICHI KOGYO SEIYAKU CO., LTD., Shimogyo-ku Kyoto 600 (JP)
(72) Inventor: Kono, Michiyuki, Neyagawa, Osaka 572 (JP); Mori, Shigeo, Nishikyo-ku, Kyoto 615 (JP)
(74) Representative: Rackham, Anthony Charles

(56) References cited:
- EP-A- 0 312 160
- EP-A- 0 373 116
- EP-A- 0 460 876

## Description

The present invention relates to ion-conductive polymer electrolytes, and in particular, relates to ion-conductive polymer electrolytes characterized in that the electrolytes are produced by polymerizing alkylene oxides, introducing polymerizable functional groups to the terminals of the resulting organic compounds, crosslinking the compounds to produce organic polymers, and introducing soluble electrolytic salt compounds into the organic polymers.

Known ion-conductive polymer electrolytes include, for example:
(1) organic polymer electrolytes of polyethylene oxide (PEO);
(2) organic polymer electrolytes that are produced by doping organic compounds containing, in random copolymer form, polyethylene oxide parts and polypropylene oxide parts of polyfunctional polyether molecular structure, with electrolytic salt, and crosslinking the compounds (for instance, Japanese Provisional Patent Publication No. SHO-62-249361);
(3) solid polymer electrolytes comprising ethylene oxide copolymers containing ionic compounds in a dissolved state (for instance, Japanese Provisional Patent Publication No. SHO-61-83249);
(4) ion-conductive polymer electrolytes using plastic polymer solid materials virtually comprising thermoplastic homopolymers having no intersecting bonding or branch chains of copolymers (for instance, refer to Japanese Provisional Patent Publication No. SHO-55-98480) ; and
(5) organic polymer electrolytes that are produced by crosslinking organic compounds having multifunctional polyether molecular structure after doping the compounds with electrolytes, the polyether molecular structure having side chains having polyether structure (see, for example, Japanese Provisional Patent Publication No. HEI-3-200865).

However, when the conventional ion-conductive polymer electrolytes 1 to 4 above were applied, for example, as electrolytes for batteries, etc., they posed problems of insufficient ionic conductivity. To solve the problem, some attempts of impregnating the polymers with nonaqueous solvents, such as propylene carbonate being used in conventional liquid electrolytes, were proposed to improve the conductivity (for instance, refer to Japanese Provisional Patent Publication No. SHO-63-94501) . The conductivities of the solid polymer electrolytes thus obtained are close to the level for practical use. Such solid polymer electrolytes, however, have problems that, when the polymer is used under high temperature (60°C or over), the solvent will evaporate and the performance of the electrolytes will deteriorate significantly. Moreover, there are risks that in case of sealed batteries such as those using metallic lithium the sealing system might be damaged. It, therefore, is not possible to use such solid polymer electrolytes in large-sized batteries that operate at high temperatures.

The crosslinked polymers 2 do not flow at relatively high temperatures and they have excellent mechanical properties. The crosslinking, however, restrains the segment movements of their molecular chains. As a result, the ionic conductivity is at most 10⁻⁴ S/cm at 80°C. Their ionic conductivities are inadequate.

The thermoplastic polymers 4 have generally higher ionic conductivities relative to the crosslinked polymers. They, however, have demerits that they tend to flow at high temperatures. The conventional ion-conductive polymer electrolytes, therefore, are not satisfactory in many senses as electrolytes for large-sized batteries or the like that operate at relatively high temperatures (60-80°C) such as those for load levelling and electric vehicles.

Since the polymer electrolytes 5 are crosslinked, they do not flow at high temperatures, and have higher ion conductivities relative to the electrolytes 2 and useful in practical applications. They, however, need much higher conductivities for applications in batteries.

The present invention was made in view of the above-mentioned problems of the prior art, and is intended to provide ion-conductive polymer electrolytes that are safe even at relatively high temperatures and have high ionic conductivities.

According to the present invention, there is provided an ion-conductive polymer electrolyte which is produced by crosslinking a terminal-modified polyalkyleneoxide having the formula I or II:

Z-[-(CH₂-CH(R²) -O-)ₘ-Y]ₖ (I)

Z-[-(R¹)ₚ-(CH₂-CH(R²)-O-)ₘ-Y]ₖ (II)

where Z is a residue of an alcohol compound and/or an amine compound, R² is a hydrogen, alkyl group or phenyl group, k is an integer from 1 to 12, m is an integer from 1 to 240, p is an integer from 1 to 220, R¹ is a group expressed by the following formula III: 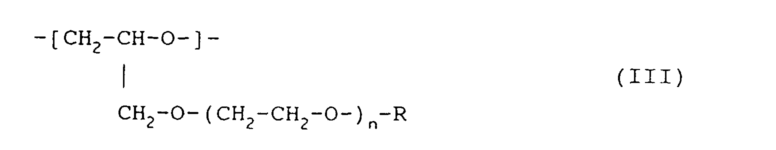 in which n is 0 or an integer from 1 to 25, and R is an alkyl group, alkenyl group, aryl group or alkylaryl group with a carbon number from 1 to 20,
and having a mean molecular weight of 500 to 50,000 to produce an organic polymer and by introducing soluble electrolytic salt compound in the organic polymer, the terminal groups Y being partly an alkyl or aryl group and the remaining terminal groups being an acryloyl or methacryloyl group.

The terminal-modified polyalkylene oxide expressed by the chemical formula (I) can be obtained by introducing an alkyl or aryl group and a polymerizable functional group to the terminal active hydrogen of the main chain of polyether compound. The polyether compound can be obtained by making active-hydrogen-containing compounds react with alkylene oxides.

The chemical compounds of the chemical formula (II) can be obtained by introducing an alkyl or aryl group and a polymerizable functional group to the terminal active hydrogen groups of the main chain of polyether compounds. The polyether compounds can be obtained by making active-hydrogen-containing compounds react with glycidyl ethers together with alkylene oxides.

When the mean molecular weight is less than 500, high ion-conductivities cannot be obtained. When the mean molecular weight is greater than 50,000, it will be difficult to purify the polymers.

The ion-conductive polymer electrolytes according to the present invention can be obtained by using two or more compounds expressed by the chemical formula (I) or (II).

The alcohol and/or amine compounds that are used in synthesis of compounds expressed by the chemical formula (I) and (II) include, for example, methanol, ethanol, polyhydric alcohols such as ethylene glycol, propylene glycol, 1,4-butanediol, glycerol, trimethylol propane, sorbitol, sucrose and polyglycerol, amine compounds such as butylamine, 2-ethylhexylamine, ethylenediamine, hexamethylenediamine, diethylenetriamine, triethylenetetramine, tetraethylenepentamine, pentaethylenehexamine aniline, benzylamine and phenylenediamine, and compounds having different kinds of active-hydrogen in one molecule such as monoethanolamine and diethanolamine. Of these compounds, polyhydric alcohols are preferred.

Alkylene oxides used in synthesis of compounds of the chemical formulas (I) and (II) include alpha-olefine oxides with a carbon number from 4 to 9 such as ethylene oxide, propylene oxide, 1,2-epoxybutane, 1,2-epoxypentane, 1,2-epoxyhexane, 1,2-epoxyheptane, 1,2-epoxyoctane and 1,2-epoxynonane, alpha-olefine oxides with a carbon number 10 or over, and styrene oxides. Ethylene oxide and propylene oxide are preferable.

Glycidyl ethers that are made to react with active-hydrogen-containing compounds in the synthesis of compounds of the chemical formula (II) include alkyl-, alkenyl-, aryl- and alkylaryl-polyethyleneglycol glycidyl ethers expressed by the following chemical formula (IV). 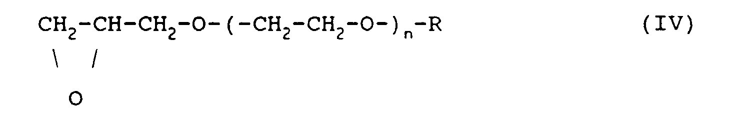 Where n is an integer from 0 to 25, and R is an alkyl group, alkenyl group, aryl group or alkylaryl group with a carbon number from 1 to 20. Typical examples of R include, for instance, normal chain alkyl groups such as methyl group, ethyl group and butyl group, branching alkyl groups such as isopropyl group, sec-butyl group and tert-butyl group, alkenyl groups such as vinyl group, allyl group, 1-propenyl group and 1,3-butadienyl group, and aryl or alkylaryl groups such as phenyl group, nonylphenyl group, tolyl group and benzyl group. Of such compounds, those of which n is from 1 to 15 and the carbon number of R is from 1 to 12 are desirable.

The terminal group Y of the organic compound of the chemical formula (I) or chemical formula (II) according to the present invention is partly an alkyl group or aryl group with alkyl group being particularly preferable. Moreover, of alkyl groups, lower ones such as methyl group and ethyl group are preferable. Their preferable ratio to the terminal group Y is from 50 to 98%. The remaining parts of the terminal group Y is acryloyl or methacryloyl group. The ratio of polymerizable functional groups to the terminal group Y is preferably from 2 to 50%. The reason is that when the polymerizable functional groups are less than 2%, the resulting ion-conductive polymers have a low mechanical strength. On the other hand, when the ratio is greater than 50%, the resulting polymers do not give a high ionic conductivity.

Such terminal groups Y can be introduced, for instance, by the following method. First, after polymerization of alkylene oxides in the case of the chemical formula (I), and after polymerization of glycidyl ethers and alkylene oxides in the case of the chemical formula (II), an alkyl or aryl group is introduced to some of the hydroxyl groups present in the terminals by alkoxylation using alkyl halide, etc. Next, the remaining hydroxyl groups are substituted by esterification, etc. to introduce the acryloyl or methacryloyl groups.

The resulting organic compounds are doped with soluble electrolytic salt compounds as shown below. Then, if necessary, a polymerization initiator and/or a sensitizer may be used, and the crosslinking is made under irradiation of active radiation of light, heat, electron beam, etc. to obtain ion-conductive polymer electrolytes of the present invention. The soluble electrolytic salt compound may be at least one kind or two or more kinds selected from a group of lithium fluoride, lithium chloride, lithium bromide, lithium iodide, lithium nitrate, lithium thiocyanate, lithium perchlorate, lithium trifluoromethanesulfonate, lithium tetraborofluoride, bis-trifluoromethylsulfonylimide lithium, tris-trifluoromethylsulfonylmethyl lithium, sodium thiocyanate, sodium perchlorate, sodium trifluoromethanesulfonate, sodium tetraborofluoride, potassium thiocyanate, potassium perchlorate, potassiumtrofluoromethanesulfonate, potassiumtetraborofluoride, magnesium thiocyanate, magnesium perchlorate, and magnesium trifluoromethanesulfonate.

In the above, explanation was given to cases wherein, in the compounds of the chemical formula (I) or (II) prior to crosslinking, terminal groups Y comprising alkyl or aryl group and terminal groups Y comprising acryloyl or methacryloyl group may be present in the same polymer molecules. Moreover, mixtures of polymers of which terminal groups comprise alkyl group or aryl group only and polymers of which terminal groups comprise acryloyl or methacryloyl group only may be used.

Other ion-conductive polymer electrolytes according to the present invention can be obtained by making organic polymers containing soluble electrolytic salt compounds, the organic polymers being prepared by crosslinking anyone of the following mixed polymers:
(i) mixed polymers of
   an organic polymer component A: an organic compound expressed by the chemical formula (II) with mean molecular weight from 500 to 50,000, of which the terminal group Y is an alkyl or aryl group, and
   an organic polymer component B: an organic compound expressed by the chemical formula (II) with mean molecular weight from 500 to 50,000, of which the terminal group Y is an acryloyl or methacryloyl group;
(ii) mixed polymers of
   an organic polymer component C: terminal-modified polyalkyleneoxide expressed by the chemical formula (I) with mean molecular weight from 500 to 50,000, of which the terminal group Y is an alkyl or aryl group, and
   an organic polymer component B;
(iii) mixed polymers of
   an organic polymer component D: terminal-modified polyalkyleneoxide expressed by the chemical formula (I) with mean molecular weight from 500 to 50,000, of which the terminal group Y is an acryloyl or methacryloyl group, and
   the organic polymer component A; and
(iv) mixed polymers of
   the organic polymer component C, and
   the organic polymer component D.

The above-mentioned organic polymer components A and B expressed by the chemical formula (II) can be obtained, like those mentioned above, from compounds that can be obtained by making active hydrogen-containing compounds react with glycidyl ethers and alkylene oxides. The above-mentioned organic polymer components C and D expressed by the chemical formula (I) can be obtained from compounds that can be obtained by making active-hydrogen-containing chemicals react with alkylene oxides. The active-hydrogen-containing compounds, glycidyl ethers and alkylene oxides can include those mentioned above, respectively.

The organic polymer components A and C can be obtained in the following way. Like those mentioned above, the terminal hydroxyl groups of the compounds expressed by the chemical formula (I) or the chemical formula (II) are turned into alcoholates. After that, the compounds are made to react with alkyl halide, etc. to modify the terminal groups Y into alkyl or aryl group. The organic polymer components B and D can be obtained in the following way. Like those mentioned above, the terminal groups can be modified into an acryloyl or methacryloyl group by esterification of the terminal hydroxyl groups and unsaturated acid.

In the mixed polymers comprising two components selected from the organic polymer components A, B, C and D, that is to say, mixed polymers comprising organic polymer components A and B, organic polymer components C and B, organic polymer components A and C, and organic polymer components C and D, it is desirable that the ratio of the former component (component A or C) of each mixed polymer is from 50 to 98 percents and the ratio of the latter component (component B or D) is from 50 to 2 percents. The reason is that, of these components, the crosslinking components are B and D, and if their ratios exceed 50%, the crosslinking density will become too high and the ionic conductivity will drop. On the other hand, if their ratios are less than 2%, it will become impossible to crosslink.

The terminal-modified organic polymer mixtures thus obtained are doped with soluble electrolytic salt compounds similar to those mentioned above. Then, the mixtures are crosslinked, if necessary with the use of polymerization initiator and/or sensitizer, under irradiation of active radiation of heat, light, electron beam, etc. to obtain ion-conductive polymer electrolytes according to the present invention.

Since the ion-conductive polymer electrolytes having the above-mentioned configuration according to the present invention comprise organic polymers wherein polyether compounds of specific structures are crosslinked, amorphous phases which contribute to ionic conductivity will be stabilized, and high ionic conductivities will be exhibited from low temperatures to high temperatures. Moreover, since the main chain terminal groups contain an adequate quantity of polymerizable functional groups, a certain level of mechanical strength can be maintained without lowering the ionic conductivity.

Some embodiments of the present invention will be described in the following.

### Embodiment 1

Glycerol was made to react with a mixture of ethylene oxide and propylene oxides (weight ratio : 4 to 1) in the presence of a catalyst, and a copolymer of which molecular weight is 8,000 was produced. 0.72 equivalent of sodium methylate to the terminal hydroxyl groups of the copolymer was added to the copolymer, and methanol was removed at 100°C to turn the terminal hydroxyl groups into alcoholates. Then methyl iodide was added to the reaction mixture, and the mixture was allowed to react at 80°C for 6 hours to methoxify 70% of the terminal hydroxyl groups. Next, 1.2 equivalents of acrylic acid to the remaining hydroxyl groups, and 50 times (by weight) as much toluene as said acrylic acid, and 0.01 mole % of sulfuric acid were added to the mixture, and the mixture was allowed to react at 80-90°C for 8 hours to esterify the remaining hydroxyl groups. As a result, terminal-modified polyalkylene oxide of which 70% terminal groups were methoxyfied and 30% terminal groups were acrylesterified was obtained.

0.4g of lithium perchlorate and 0.006g of polymerization initiator (1-hydroxycyclohexyl phenyl ketone) were added to 3.6g of the terminal-modified polyalkylene oxide thus obtained, and they were evenly dissolved. Then the solution was poured over a glass plate, and was irradiated by ultraviolet ray of 7 mW/cm² in strength in an atmosphere of nitrogen. As a result, an ion-conductive polymer electrolyte of 50 um (micron) thick was obtained.

### Embodiment 2

Glycerol was made to react with a mixture of ethylene oxide and propylene oxide (weight ratio 9 to 1) in the presence of a catalyst, and a copolymer of which molecular weight is 6,000 was produced. 0.87 equivalent of sodium methylate to the terminal hydroxyl groups of the copolymer was added to the copolymer, and methanol was removed at 100°C to turn the terminal hydroxyl groups into alcoholates. Then methyl iodide was added to the reaction mixture, and the mixture was allowed to react at 80°C for 6 hours to methoxify 85% of the terminal hydroxyl groups. Next, 1.2 equivalents of acrylic acid to the remaining hydroxyl groups, and 50 times (by weight) as much toluene as said acrylic acid, and 0.01 mole % of sulfuric acid were added to the mixture, and the mixture was allowed to react at 80-90°C for 8 hours to esterify the remaining hydroxyl groups. As a result, terminal-modified polyalkyleneoxide of which 85% terminal groups were methoxyfied and 15% terminal groups were acrylesterified was obtained.

0.4g of lithium perchlorate and 0.006g of polymerization initiator (1-hydroxycyclohexyl phenyl ketone) were added to 3.6g of the terminal-modified polyalkylene oxide thus obtained, and they were evenly dissolved. Then the solution was poured over a glass plate, and was irradiated by ultraviolet rays of 7 mW/cm² in strength in an atmosphere of nitrogen. As a result, an ion-conductive polymer electrolyte of 50 um (micron) thick was obtained.

### Embodiment 3

Glycerol was made to react with a mixture of ethylene oxide and propylene oxide (weight ratio: 9 : 1) in the presence of a catalyst, and a copolymer of which molecular weight is 9,000 was produced. 0.92 equivalent of sodium methylate to the terminal hydroxyl groups of the copolymer was added to the copolymer, and methanol was removed at 100°C to turn the terminal hydroxyl groups into alcoholates. Then methyl iodide was added to the reaction mixture, and the mixture was allowed to react at 80°C for 6 hours to methoxify 90% of the terminal hydroxyl groups. Next, 1.2 equivalents of acrylic acid to the remaining hydroxyl groups, and 50 times (by weight ) as much toluene as said acrylic acid, and 0.01 mole % of sulfuric acid were added to the mixture, and the mixture was allowed to react at 80-90°C for 8 hours to esterify the remaining hydroxyl groups. As a result, terminal-modified polyalkylene oxide of which 90% terminal groups were methoxyfied and 10% terminal groups were acrylesterified was obtained.

0.4g of lithium perchlorate and 0.006g of polymerization initiator (1-hydroxycyclohexyl phenyl ketone) were added to 3.6g of the terminal-modified polyalkylene oxide thus obtained, and they were evenly dissolved. Then the solution was poured over a glass plate, and was irradiated by ultraviolet rays of 7 mW/cm² in strength in an atmosphere of nitrogen. As a result, an ion-conductive polymer electrolyte of 50 um (micron) thick was obtained.

### Embodiment 4

Glycerol was made to react with ethylene oxide in the presence of a catalyst, and a polymer of which molecular weight is 5,000 was produced. 0.85 equivalent of sodium methylate to the terminal hydroxyl groups of the polymer was added to the polymer, and methanol was removed at 100°C to turn the terminal hydroxyl groups into alcoholates. Then methyl iodide was added to the reaction mixture, and the mixture was allowed to react at 80°C for 6 hours to methoxify 85% of the terminal hydroxyl groups. Next, 1.2 equivalents of acrylic acid to the remaining hydroxyl groups, and 50 times (by weight) as much toluene as said acrylic acid, and 0.01 mole % of sulfuric acid were added to the mixture, and the mixture was allowed to react at 80-90°C for 8 hours to esterify the remaining hydroxyl groups. As a result, terminal-modified polyalkyleneoxide of which 85% terminal groups were methoxyfied and 15% terminal groups were acrylesterified was obtained.

0.4g of lithium perchlorate and 0.006g of polymerization initiator (1-hydroxycyclohexyl phenyl ketone) were added to 3.6g of the terminal-modified polyalkylene oxide thus obtained, and they were evenly dissolved. Then the solution was poured over a glass plate, and was irradiated by ultraviolet ray of 7 mW/cm² in strength in an atmosphere of nitrogen. As a result, an ion-conductive polymer electrolyte of 50 um (micron) thick was obtained.

### Embodiment 5

Glycerol was made to react with a mixture of ethylene oxide and 1.2-epoxybutane (weight ratio : 85 : 15) in the presence of a catalyst, and a copolymer of which molecular weight is 7,000 was produced. 0.60 equivalent of sodium methylate to the terminal hydroxyl groups of the copolymer was added to the copolymer, and methanol was removed at 100°C to turn the terminal hydroxyl groups into alcoholates. Then methyl iodide was added to the reaction mixture, and the mixture was allowed to react at 80°C for 6 hours to methoxify 60% of the terminal hydroxyl groups. Next, 1.2 equivalents of acrylic acid to the remaining hydroxyl groups, and 50 times (by weight) as much toluene as said acrylic acid, and 0.01 mole % of sulfuric acid were added to the mixture, and the mixture was allowed to react at 80-90°C for 8 hours. As a result, terminal-modified polyalkyleneoxide of which 60% terminal groups were methoxyfied and 40% terminal groups were acrylesterified was obtained.

0.4g of lithium perchlorate and 0.006g of polymerization initiator (1-hydroxycyclohexyl phenyl ketone) were added to 3.6g of the terminal-modified polyalkylene oxide thus obtained, and they were evenly dissolved. Then the solution was poured over a glass plate, and was irradiated by ultraviolet ray of 7 mW/cm² in strength in an atmosphere of nitrogen. As a result, an ion-conductive polymer electrolyte of 50 um (micron) thick was obtained.

### Embodiment 6

0.4g of lithium perchlorate and 0.006g of polymerization initiator (1-hydroxycyclohexyl phenyl ketone) were added to 1.8g of the terminal-modified polyalkylene oxide obtained in Embodiment 1 and 1.8g of the terminal-modified polyalkylene oxide obtained in Embodiment 3, and they were evenly dissolved. Then the solution was poured over a glass plate, and was irradiated by ultraviolet ray of 7 mW/cm² in strength in an atmosphere of nitrogen. As a result, an ion-conductive polymer electrolyte of 50 um (micron) thick was obtained.

### Embodiment 7

0.6g of propylene carbonate and 0.5g of lithium perchlorate were added to 3.0g of terminal-modified polyalkylene oxide obtained in Embodiment 1, and they were evenly dissolved. Then the solution was poured over a glass plate, and was irradiated by electron beam with an electron-curtain type electron-beam irradiator (output : 200 kV; absorbed dose: 5 Mrad) in an atmosphere of nitrogen. As a result, an ion-conductive polymer electrolyte of 20 um (micron) thick was obtained.

### Comparative example 1

An ion -conductive polymer electrolyte was obtained by the method of Embodiment 1 except the terminals of the polyalkyleneoxide used in Embodiment 1 were completely acrylated.

### Lithium Ion Conductivity Test

To measure ion conductivities of the ion-conductive polymer electrolytes of Embodiments 1 through 7 and Comparative example 1 thus obtained, each polymer electrolyte was placed between platinum plates, the A.C. impedance between the electrodes was measured, and complex impedance analysis was made. The results are shown in Table 1 below. The measuring instrument was an impedance analyzer (model : 4192A) of Yokogawa-Hewlett-Packard. The measuring conditions were as follows: applied voltage = 10 mV; measuring frequency = 5 Hz - 13 MHz.

**Table 1**

| | Ionic conductivity(S/cm)* | | |
|---|---|---|---|
| | 80°C | 40°C | 25°C |
| Embodiment 1 | 1.10 X10⁻³ | 1.4X10⁻⁴ | 4.1X10⁻⁵ |
| 2 | 0.90 X10⁻³ | 1.5X10⁻⁴ | 5.2X10⁻⁵ |
| 3 | 0.89 X10⁻³ | 1.2X10⁻⁴ | 4.0X10⁻⁵ |
| 4 | 1.20 X10⁻³ | 1.8X10⁻⁴ | 3.8X10⁻⁵ |
| 5 | 0.88 X10⁻³ | 1.5X10⁻⁴ | 4.9X10⁻⁵ |
| 6 | 0.76 X10⁻³ | 1.1X10⁻⁴ | 2.9X10⁻⁵ |
| 7 | 2.10 X10⁻³ | 5.8X10⁻⁴ | 6.8X10⁻⁵ |
| Comparative example 1 | 1.00 X10⁻⁴ | 3.5X10⁻⁵ | 1.0X10⁻⁵ |

| | | | |
|---|---|---|---|
| *S:Siemens | | | |

From Table 1 it is clear that the ion-conductive polymer electrolytes of Embodiments 1 through 7 have excellent ionic conductivities. In particular, they show excellent ionic conductivities at relatively high temperatures.

### Embodiment 8

A mixture of 18 g of glycerol, 730 g of methyldiethyleneglycol glycidyl ether expressed by the following chemical formula (V) and 182g of ethylene oxide was allowed to react in the presence of a catalyst (2g of potassium hydroxide). Then desalting and purification were made. As a result, 876g of polyether of which molecular weight is 4,700 (calculated from the hydroxyl value) was obtained.

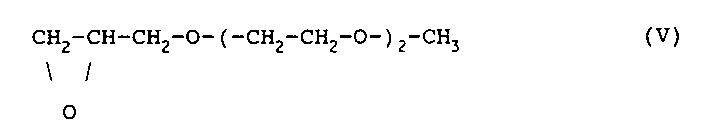

0.72 equivalent of sodium methylate to the terminal hydroxyl groups of the polyether was added to the polyether, and methanol was removed at 100°C to turn the terminal hydroxyl groups into alcoholates. Then methyl iodide was added to the reaction mixture, and the mixture was allowed to react at 80°C for 6 hours to methoxify 70% of the terminal hydroxyl groups. Next, 1.1 equivalents of acrylic acid to the remaining hydroxyl groups, and 20 times (by weight) as much toluene as said acrylic acid, and 0.01 mole % of sulfuric acid were added to the mixture, and the mixture was allowed to react at 80-90°C for 8 hours to esterify the remaining hydroxyl groups. As a result, polyether of which 70% terminal groups were methoxified and 30% terminal groups were acrylesterified was obtained.

0.4g of lithium perchlorate and 0.02g of polymerization initiator (1-hydroxycyclohexyl phenyl ketone) were added to 3.6g of the terminal-modified polyether thus obtained, and they were evenly dissolved. Then the solution was poured over a glass plate, and was irradiated by ultraviolet rays of 7 mW/cm² in strength in an atmosphere of nitrogen. As a result, an ion-conductive polymer electrolyte of 50 um (micron) thick was obtained.

### Embodiment 9

A mixture of 18g of glycerol, 730g of methyldiethylene glycolglycidyl ether expressed by the above-mentioned chemical formula (V) and 182g of ethylene oxide was allowed to react in the presence of a catalyst (2g of potassium hydroxide). Then desalting and purification were made. As a result, 876g of polyether of which molecular weight is 4,700 (calculated from the hydroxyl value) was obtained.

0.91 equivalent of sodium methylate to the hydroxyl groups of the polyether was added to the polyether, and methanol was removed at 100°C to turn the terminal hydroxyl groups into alcoholates. Then methyl iodide was added to the reaction mixture, and the mixture was allowed to react at 80°C for 6 hours to methoxify 90% of the terminal hydroxyl groups. Next, 1.1 equivalents of acrylic acid to the remaining hydroxyl groups, and 20 times (by weight) as much toluene as said acrylic acid, and 0.01 mole % of sulfuric acid were added to the mixture, and the mixture was allowed to react at 80-90°C for 8 hours to esterify the remaining hydroxyl groups. As a result, polyether of which 90% terminal groups were methoxified and 10% terminal groups were acrylated was obtained.

0.4g of lithium perchlorate and 0.02g of polymerization initiator (1-hydroxylcyclohexyl phenyl ketone) were added to 3.6g of the terminal-modified polyether thus obtained, and they were evenly dissolved. Then the solution was poured over a glass plate, and was irradiated by ultraviolet rays of 7 mW/cm² in strength in an atmosphere of nitrogen for two minutes. As a result, an ion-conductive polymer electrolyte of 50 um (micron) thick was obtained.

### Embodiment 10

A mixture of 20g of sorbitol, 1320g of methyltriethyleneglycol triethyleneglycol glycidyl ether expressed by the following chemical formula (VI) and 30g of ethylene oxide was allowed to react in the presence of a catalyst (2.7g of potassium hydroxide). Then desalting and purification were made. As a result, 1251g of polyether having a molecular weight of 12,300 (calculated from the hydroxyl value) (the compound expressed by the chemical formula (II)) was obtained.

R¹ in the chemical formula (II) is a group expressed by the chemical formula (III). The group Z in the chemical formula (II) is just as expressed by the following chemical formula (VII), and the marks are p=3, m=9, Y=H, k=6 and n=1. R in the chemical formula (III) is a methyl group.

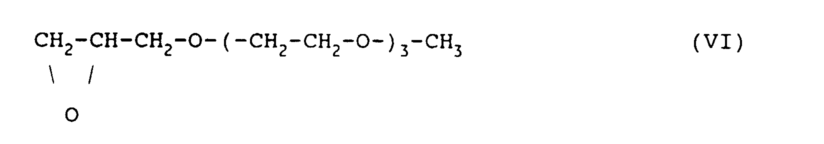

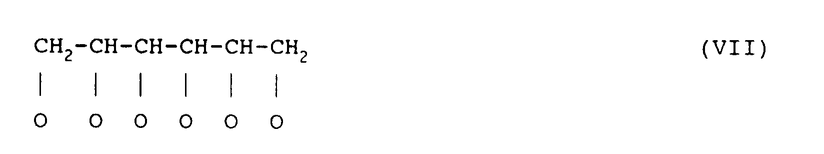

0.82 equivalent of sodium methylate to the hydroxyl group of the polyether was added to the polyether, and methanol was removed at 100°C to turn the terminal hydroxyl groups into alcoholates. Then methyl iodide was added to the reaction mixture, and the mixture was allowed to react at 80°C for 6 hours to methoxify 80% of the terminal hydroxyl groups. Next, 1.1 equivalents of acrylic acid to the remaining hydroxyl groups, and 20 times (by weight) as much toluene as said acrylic acid, and 0.01 mole % of sulfuric acid were allowed to react at 80-90°C for 8 hours to esterify the remaining hydroxyl groups. As a result, polyether of which 80% terminal groups were methoxified and 20% terminal groups were acrylesterified was obtained.

0.4g of lithium perchlorate and 0.02g of polymerization initiator (1-hydroxylcyclohexyl phenyl ketone) were added to 3.6g of the terminal-modified polyether thus obtained, and they were evenly dissolved. Then the solution was poured over a glass plate, and was irradiated by ultraviolet rays of 7 mW/cm² in strength in an atmosphere of nitrogen for two minutes. As a result, an ion-conductive polymer electrolyte of 50 um (micron) thick was obtained.

### Embodiment 11

A mixture of 20g of ethylenediamine, 5520g of phenyl-hexaethyleneglycol hexaethyleneglycol glycidyl ether expressed by the following chemical formula (VIII) and 1173g of ethylene oxide was allowed to react in the presence of a catalyst (9.4g of potassium hydroxide). Then desalting and purification were made. As a result, 6590g of polyether having a molecular weight of 19920g (calculated from the hydroxyl number) was obtained.

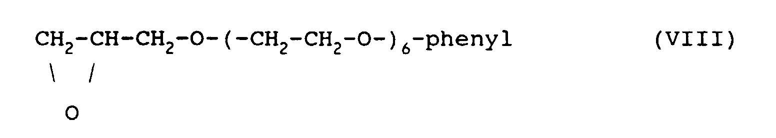

0.85 equivalent of sodium methylate to the hydroxyl groups of the polyether was added to the polyether, and methanol was removed at 100°C to turn the terminal hydroxyl groups into alcoholates. Then methyl iodide was added to the reaction mixture, and the mixture was allowed to react at 80°C for 6 hours to methoxify 85% of the terminal hydroxyl groups. Next, 1.1 equivalents of acrylic acid to the remaining hydroxyl groups, and 20 times (in weight) as much toluene as said acrylic acid, and 0.01 mole % of sulfuric acid were allowed to react at 80-90°C for 8 hours to esterify the remaining hydroxyl groups. As a result, polyether of which 85% terminal groups were methoxified and 15% terminal groups were acrylesterified was obtained.

0.4g of lithium perchlorate and 0.02g of polymerization initiator (1-hydroxylcyclohexyl phenyl ketone) were added to 3.6g of the terminal-modified polyether thus obtained, and they were evenly dissolved. Then the solution was poured over a glass plate, and was irradiated by ultraviolet rays of 7 mW/cm² in strength in an atmosphere of nitrogen for two minutes. As a result, an ion-conductive polymer electrolyte of 50 um (micron) thick was obtained.

### Embodiment 12

A mixture of 30g of pentaehylenehexamine, 480g of methyl-triethyleneglycol glycidyl ether expressed by the chemical formula (VI) and 460g of ethylene oxide was allowed to react in the presence of a catalyst (6.9g of potassium hydroxide). Then desalting and purification were made. As a result, 850g of polyether having a molecular weight of 7250 (calculated from the hydroxyl value) (a compound expressed by the chemical formula (II)) was obtained. R1 in the chemical formula (II) is group expressed by the chemical formula (III), and the group Z in the chemical formula (II) is as shown by the following chemical formula (IX). The marks are P=3, M=2, Y=H, K=8 and n=10. R in the chemical formula (III) is methyl group.

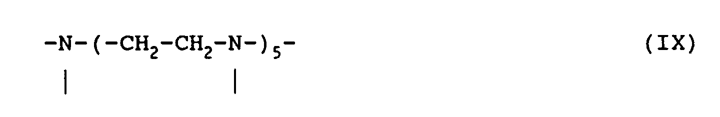

0.51 equivalent of sodium methylate to the hydroxyl groups of the polyether was added to the polyether, and methanol was removed at 100°C to turn the terminal hydroxyl groups into alcoholates. Then methyl iodide was added to the reaction mixture, and the mixture was allowed to react at 80°C for 6 hours to methoxify 50% of the terminal hydroxyl groups. Next, 1.1 equivalents of acrylic acid to the remaining hydroxyl groups, 20 times (in weight) as much toluene as said acrylic acid, and 0.01 mole % of sulfuric acid were allowed to react at 80-90°C for 8 hours to esterify the remaining hydroxyl groups. As a result, polyether of which 50% terminal groups were methoxified and 50% terminal groups were acrylesterified was obtained.

0.4g of lithium perchlorate and 0.02g of polymerization initiator (1-hydroxylcyclohexyl phenyl ketone) were added to 3.6g of the terminal-modified polyether thus obtained, and they were evenly dissolved. Then the solution was poured over a glass plate, and was irradiated by ultraviolet rays of 7 mW/cm² in strength in an atmosphere of nitrogen for two minutes. As a result, an ion-conductive polymer electrolyte of 50 um (micron) thick was obtained.

### Comparative example 2

In place of polyether having a molecular weight of 4,700, random ether of ethylene oxide : propylene oxide = 8 : 2 having a mean molecular weight of 3,000 was used to prepare polyether of which terminals were completely acrylated. Other than this, a method quite identical to that of Embodiment was used to prepare an ion-conductive polymer electrolyte.

### Lithium Ion Conductivity Test

To measure ionic conductivities of the ion-conductive polymer electrolytes of Embodiments 8 through 12 and Comparative example 2 thus obtained, each polymer electrolyte was placed between platinum plates, the A.C. impedance between the electrodes was measured, and complex impedance analysis was made. The results are shown in Table 2 below. The ionic conductivities of said electrolytes after keeping them at 100°C in a sealed condition for 100 days are also shown in Table 2. The measuring instruments and the measuring conditions are similar to those of the above-mentioned Embodiments 1 through 7.

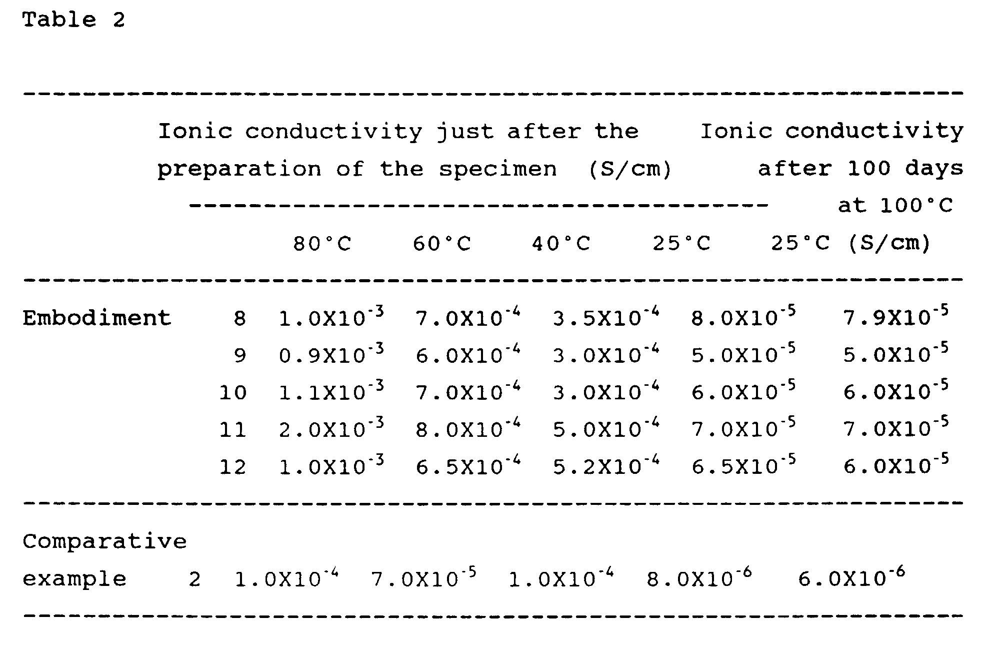

From Table 2 it is clear that the ion-conductive polymer electrolytes of Embodiments 8 through 12 have excellent ionic conductivities. In particular, they show excellent ionic conductivities at relatively high temperatures.

### Embodiment 13

A mixture of 18g of glycerol, 730g of methyldiethyleneglycol glycidyl ether expressed by the chemical formula (V) and 182g of ethylene oxide was allowed to react in the presence of a catalyst (2g of potassium hydroxyl). Then desalting and purification were made. As a result, 876g of polyether having a molecular weight of 4,700 (calculated from the hydroxyl value) was obtained.

1.1 equivalents of sodium methylate to the hydroxyl groups of the polyether was added to the polyether, and methanol was removed at 100°C to turn the terminal hydroxyl groups into alcoholates. Then methyl iodide was added to the reaction mixture, and the mixture was allowed to react at 80°C for 6 hours to methoxify the terminal hydroxyl groups (the resulting compound is called "compound A-1" and corresponds to the organic polymer component A).

Glycerol and a mixture of ethylene oxide and propylene oxide (weight ratio = 4 : 1) were allowed to react in the presence of a catalyst to prepare a copolymer having a molecular weight of 8,000. 1.2 equivalents of acrylic acid to the terminal hydroxyl groups of the copolymer were added to the copolymer, and the copolymer was allowed to react with 50 times (by weight) as much toluene as said acrylic acid and 0.01 mole % of sulfuric acid at 110°C for 8 hours. As a result, terminal-acryloyl-modified polyalkyleneoxide (it is called "compound D-1" and corresponds to the organic polymer component D) was obtained.

0.4g of lithium perchlorate and 0.006g of polymerization initiator (1-hydroxycyclohexyl phenyl ketone) were added to 3.0g of the "compound A-1" and 0.6g of the "compound D-1" thus obtained, and they were evenly dissolved. Then the solution was poured over a glass plate, and was irradiated by ultraviolet rays of 7 mW/cm² in strength in an atmosphere of nitrogen. As a result, an ion-conductive polymer electrolyte of 50 um (micron) thick was obtained.

### Embodiment 14

Diethyleneglycol was allowed to react with a mixture of ethylene oxide and propylene oxide (weight ratio = 4 : 1) in the presence of a catalyst to prepare a copolymer having a molecular weight of 3,000. 1.1 equivalents of sodium methylate to the terminal hydroxyl groups of the copolymer were added to the copolymer, and methanol was removed at 100°C under depressurized condition to turn the terminal hydroxyl groups into alcoholates. Then methyl iodide was added to the reaction mixture, and the mixture was allowed to react at 80°C for 6 hours to obtain terminal-methoxified-modified polyalkylene oxide (hereinafter it is called "compound C-2" and corresponds to the organic polymer component C).

0.4g of lithium perchlorate and 0.02g of polymerization initiator (1-hydroxycyclohexyl phenyl ketone) were added to 3.2g of the "compound C-2" and 0.4g of the "compound D-1" synthesized by the method of Embodiment 13, and they were evenly dissolved. Then the solution was poured over a glass plate, and was irradiated by ultraviolet rays of 7 mW/cm² in strength in an atmosphere of nitrogen for 2 minutes. As a result, an ion-conductive polymer electrolyte of 50 um (micron) thick was obtained.

### Embodiment 15

A mixture of 20g of ethylenediamine, 5520g of phenylhexaethyleneglycol hexaethyleneglycol glycidyl ether and 1173g of ethylene oxide was allowed to react in the presence of a catalyst (9.4g of potassium hydroxide). Then desalting and purification were made. As a result, 6590g of polyether having a molecular weight of 19,920 (calculated from the hydroxyl value) was obtained.

1.1 equivalents of acrylic acid to the hydroxyl groups of the polyether, 20 times (by weight) as much toluene as said acrylic acid and 0.01 mole % of sulfuric acid were allowed to react at 80-90°C for 8 hours to obtain terminal-acryloyl-modified organic polymer (hereinafter it is called "compound B-2" and corresponds the organic polymer component B) was obtained.

0.4g of lithium perchlorate and 0.02g of polymerization initiator (1-hydroxycyclohexyl phenyl ketone) were added to 0.7g of the "compound B-2" and 2.9g of the "compound C-2" synthesized by the method of Embodiment 14, and they were evenly dissolved. Then the solution was poured over a glass plate, and was irradiated by ultraviolet rays of 7 mW/cm² in strength in an atmosphere of nitrogen for 2 minutes. As a result, an ion-conductive polymer electrolyte of 50 um (micron) thick was obtained.

### Embodiment 16

0.4g of lithium perchlorate and 0.02g of polymerization initiator (1-hydroxycyclohexyl phenyl ketone) were added to 3.1g of the "compound A-1" synthesized by the method of Embodiment 1 and 0.5g of the "compound B-2" synthesized by the method of Embodiment 15, and they were evenly dissolved. Then the solution was poured over a glass plate, and was irradiated by ultraviolet rays of 7 mW/cm² in strength in an atmosphere for 2 minutes. As a result,an ion-conductive polymer electrolyte of 50 um (micron) thick was obtained.

### Comparative example 3

0.4g of lithium perchlorate and 0.006g of polymerization initiator (1-hydroxycyclohexyl phenyl ketone) were added to 3.6g of the "compound D-1" synthesized by the method of embodiment 13, and they were evenly dissolved. The solution was poured over a glass plate, and was irradiated by ultraviolet rays of 7 mW/cm² in strength in an atmosphere of nitrogen. As a result, an ion-conductive polymer electrolyte of 50 um (micron) thick was obtained.

### Comparative example 4

0.4g of lithium perchlorate and 0.006g of polymerization initiator (1-hydroxycyclohexyl phenyl ketone) were added to 3.6g of the "compound B-2" synthesized by the method of Embodiment 15, and they were evenly dissolved. The solution was poured over a glass plate, and was irradiated by ultraviolet ray of 7 mW/cm² in strength in an atmosphere of nitrogen. As a result, ion-conductive polymer electrolyte of 50 um (micron) thick was obtained.

### Lithium Ion Conductivity Test

To measure ionic conductivities of the ion-conductive polymer electrolytes of Embodiments 13 through 16 and Comparative examples 3 and 4 thus obtained, each polymer electrolyte was placed between platinum plates, the A. C. impedance between the electrodes was measured, and complex impedance analysis was made. The results are shown in Table 3 below. The measuring instruments and the measuring conditions are similar to those of the above-mentioned Embodiments 1 through 7.

**Table 3**

| Ionic conductivity (S/cm) | | | |
|---|---|---|---|
| | 80°C | 40°C | 25°C |
| Embodiment 13 | 0.72X10⁻³ | 1.50X10⁻⁴ | 5.00X10⁻⁵ |
| 14 | 0.98X10⁻³ | 2.10X10⁻⁴ | 6.10X10⁻⁵ |
| 15 | 1.40X10⁻³ | 5.10X10⁻⁴ | 6.00X10⁻⁵ |
| 16 | 2.10X10⁻³ | 3.30X10⁻⁴ | 4.50X10⁻⁵ |
| Comparative example 3 | 1.00X10⁻⁴ | 3.50X⁻⁵ | 1.00X10⁻⁵ |
| 4 | 2.10X10⁻⁴ | 5.00X10⁻⁵ | 9.00X10⁻⁶ |

From Table 3 it is clear that ion-conductive polymer electrolytes of Embodiments 13 through 16 have excellent ionic conductivities. In particular, they show excellent ionic conductivities at relatively high temperatures.

In contrast to them, the polymers of Comparative examples 3 and 4 have low ionic conductivities since the latter polymers comprise crosslinking components only and have excessively high crosslinking densities.

## Claims

1. An ion-conductive polymer electrolyte which is produced by crosslinking a terminal-modified polyalkyleneoxide having the formula I or II:
Z-[-(CH₂-CH(R²)-O-)ₘ-Y]ₖ (I)
Z-[-(R¹)ₚ-(CH₂-CH(R²)-O-)ₘ-Y]ₖ (II)
where Z is a residue of an alcohol compound and/or an amine compound, R² is a hydrogen, alkyl group or phenyl group, k is an integer from 1 to 12, m is an integer from 1 to 240, p is an integer from 1 to 220, R¹ is a group expressed by the following formula III: 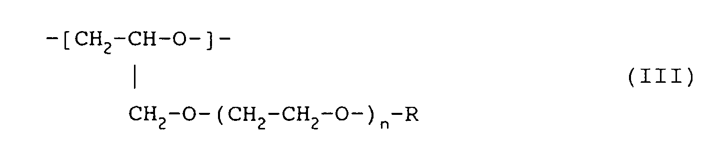 in which n is 0 or an integer from 1 to 25, and R is an alkyl group, alkenyl group, aryl group or alkylaryl group with a carbon number from 1 to 20,
and having a mean molecular weight of 500 to 50,000 to produce an organic polymer and by introducing soluble electrolytic salt compound in the organic polymer, the terminal groups Y being partly an alkyl or aryl group and the remaining terminal groups being an acryloyl or methacryloyl group .

2. An ion-conductive polymer electrolyte as claimed in Claim 1 in which the substituent group R² is a hydrogen or methyl group.

3. An ion-conductive polymer electrolyte as claimed in Claim 1 or Claim 2 in which the ratio of terminal groups Y comprising alkyl or aryl groups is from 50 to 98% and the ratio of terminal groups Y comprising acryloyl or methacryloyl groups is from 2 to 50%.

4. An ion-conductive polymer electrolyte as claimed in any preceding claim in which the organic polymer is prepared by crosslinking the terminal-modified polyalklene oxides, if necessary, with a polymerisation initiator and/or a sensitizer, under irradiation of active radiation of heat, light or electron beam.

5. An ion-conductive polymer electrolyte which is produced by crosslinking a mixed polymer to produce an organic polymer and by introducing soluble electrolytic salt compound, the mixed polymer containing:
an organic polymer component A being an organic compound of the formula II:
Z-[-(R¹)ₚ-(CH₂-CH(R²)-O-)ₘ-Y]ₖ (II)
where Z is the residue of an alcohol compound and/or amine compound, R² is a hydrogen, alkyl group or phenyl group, k is an integer from 1 to 12, p is an integer from 1 to 220, m is an integer from 1 to 240, R¹ is a group expressed by the following formula III: 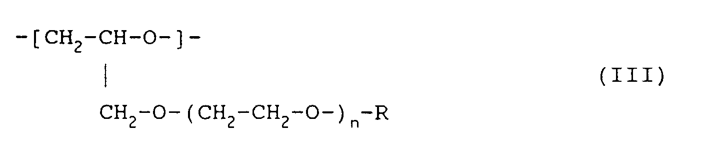 in which n is 0 or an integer from 1 to 25, and R is an alkyl group, alkenyl group, aryl group or alkylaryl group with a carbon number from 1 to 20,
with a mean molecular weight of 500 to 50,000 and having a terminal group Y comprising an alky or aryl group, and
an organic polymer component B being an organic compound of the formula II:
Z-[-(R¹)ₚ-(CH₂-CH(R²)-O-)ₘ-Y]ₖ (II)
where Z is as defined above, R² is a hydrogen, alkyl group or phenyl group, k is an integer from 1 to 12, m is an integer from 1 to 240, p is an integer from 1 to 220, R¹ is a group expressed by the following formula III: 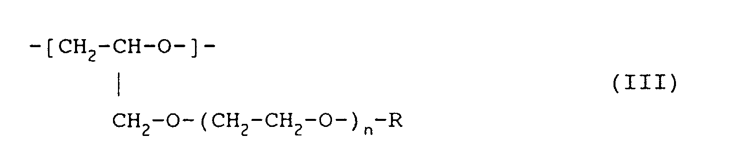 in which n is 0 or an integer from 1 to 25, and R is an alkyl group, alkenyl group, aryl group or alkylaryl group with a carbon number from 1 to 20,
with a mean molecular weight of 500 to 50,000 and having terminal groups Y comprising acryloyl or methacryloyl groups.

6. An ion-conductive polymer electrolyte as claimed in Claim 5 in which the ratio of the said organic polymer component A in the mixed polymer is from 50 to 98% and the ratio of the organic polymer component B is from 50 to 2%.

7. An ion-conductive polymer electrolyte as claimed in Claim 5 or Claim 6 in which the organic polymer is prepared by crosslinking the mixed polymer, if necessary, with a polymerisation initiator and/or a sensitizer, under irradiation of active radiation of heat, light or electron beam.

8. An ion-conductive polymer electrolyte which is produced by crosslinking a mixed polymer to produce an organic polymer and by introducing soluble electrolytic salt compound, the mixed polymer containing:
an organic polymer component C being a terminal-modified polyalkyleneoxide having the formula I:
Z-[-(CH₂-CH(R²)-O-)ₘ-Y]ₖ (I)
where Z is a residue of an alcohol compound and/or an amine compound, R² is a hydrogen, alkyl group or phenyl group, k is an integer from 1 to 12, m is an integer from 1 to 240,
with a mean molecular weight of 500 to 50,000 and having a terminal group Y comprising an alkyl or aryl group, and
an organic polymer component B being an organic compound of the formula II:
Z-[-(R¹)ₚ-(CH₂-CH(R²)-O-)ₘ-Y]ₖ (II)
where Z is as defined above, R² is a hydrogen, alkyl group or phenyl group, k is an integer from 1 to 12, m is an integer from 1 to 240, p is an integer from 1 to 220, R¹ is a group expressed by the following formula III: 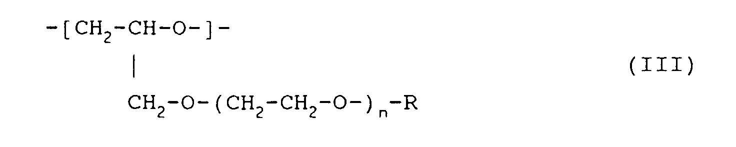 in which n is 0 or an integer from 1 to 25, and R is an alkyl group, alkenyl group, aryl group or alkylaryl group with a carbon number from 1 to 20,
with a mean molecular weight of 500 to 50,000 and having terminal groups Y comprising acryloyl or methacryloyl groups.

9. An ion-conductive polymer electrolyte as claimed in claim 8 in which the ratio of the said organic polymer component C in the mixed polymer is from 50 to 98% and the ratio of the organic polymer component B is from 50 to 2%.

10. An ion-conductive polymer electrolyte which is produced by crosslinking a mixed polymer to produce an organic polymer and by introducing soluble electrolytic salt compound, the mixed polymer containing:
an organic polymer component D being a terminal-modified polyalkyleneoxide having the formula I:
Z-[-(CH₂-CH(R²)-O-)ₘ-Y]ₖ (I)
where Z is a residue of an alcohol compound and/or an amine compound, R² is a hydrogen, alkyl group or phenyl group, k is an integer from 1 to 12, m is an integer from 1 to 240,
with a mean molecular weight of 500 to 50,000 and having a terminal group Y comprising an acryloyl or methacryloyl group, and
an organic polymer component A being an organic compound of the formula II:
Z-[-(R¹)ₚ-(CH₂-CH(R²)-O-)ₘ-Y]ₖ (II)
where Z is as defined above, R² is a hydrogen, alkyl group or phenyl group, k is an integer from 1 to 12, m is an integer from 1 to 240, p is an integer from 1 to 220, R¹ is a group expressed by the following formula III: 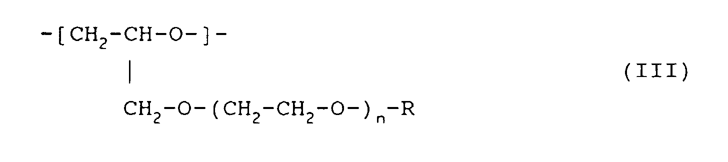 in which n is 0 or an integer from 1 to 25, and R is an alkyl group, alkenyl group, aryl group or alkylaryl group with a carbon number from 1 to 20,
with a mean molecular weight of 500 to 50,000 and having terminal groups Y comprising alkyl or aryl groups.

11. An ion-conductive polymer electrolyte as claimed in Claim 10 in which the ratio of the said organic polymer component A in the mixed polymer is from 50 to 98% and the ratio of the organic polymer component D is from 50 to 2%.

12. An ion-conductive polymer electrolyte which is produced by crosslinking a mixed polymer to produce an organic polymer and by introducing soluble electrolytic salt compound, the mixed polymer containing:
an organic polymer component C being a terminal-modified polyalkyleneoxide having the formula I:
Z-[-(CH₂-CH(R²)-O-)ₘ-Y]ₖ (I)
where Z is a residue of an alcohol compound and/or an amine compound, R² is a hydrogen, alkyl group or phenyl group, k is an integer from 1 to 12, m is an integer from 1 to 240,
with a mean molecular weight of 500 to 50,000 and having a terminal group Y comprising an alkyl or aryl group, and
an organic polymer component D being a terminal-modified polyalkyleneoxide having the formula I as defined above with a mean molecular weight of 500 to 50,000 and having a terminal group Y comprising an acryloyl or methacryloyl group.

13. An ion-conductive polymer electrolyte as claimed in Claim 12 in which the ratio of the said organic polymer component C in the mixed polymer is from 50 to 98% and the ratio of the organic polymer component D is from 50 to 2%.

## Patentansprüche

1. Ein ionenleitender Polymerelektrolyt, der durch Vernetzen eines an den Enden modifizierten Polyalkylenoxids mit der Formel I oder II:
Z-[-(CH₂-CH(R²)-O-)ₘ-Y]ₖ (I)
Z-[-(R¹)ₚ-(CH₂-CH(R²)-O-)ₘ-Y]ₖ (II)
worin Z für einen Rest einer Alkoholverbindung und/oder einer Aminverbindung, R² für Wasserstoff, eine Alkyl- oder Phenylgruppe, k für eine ganze Zahl von 1 bis 12, m für eine ganze Zahl von 1 bis 240, p für eine ganze Zahl von 1 bis 220 und R¹ für eine Gruppe steht, die durch die folgende Formel III dargestellt wird: 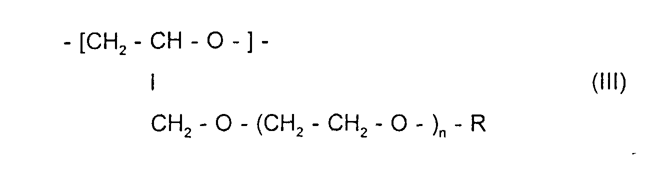 worin n für 0 oder eine ganze Zahl von 1 bis 25 und R für eine Alkyl-, Alkenyl-, Aryl- oder Alkylarylgruppe mit einer Kohlenstoffzahl von 1 bis 20 steht,
sowie einer mittleren relativen Molekülmasse von 500 bis 50 000 zur Gewinnung eines organischen Polymers und durch Einbauen einer löslichen elektrolytischen Salzverbindung in das organische Polymer hergestellt wird, wobei die endständigen Gruppen Y zum Teil Alkyl- oder Arylgruppen und die verbleibenden endständigen Gruppen Acryloyl- oder Methacryloylgruppen sind.

2. Ein ionenleitender Polymerelektrolyt nach Anspruch 1, bei dem die Substituentengruppe R² Wasserstoff oder eine Methylgruppe ist.

3. Ein ionenleitender Polymerelektrolyt nach Anspruch 1 oder Anspruch 2, bei dem der Anteil der Alkyl- oder Arylgruppen an den endständigen Gruppen Y 50 bis 98 % und der Anteil der Acryloyl- oder Methacryloylgruppen an den endständigen Gruppen Y 2 bis 50 % beträgt.

4. Ein ionenleitender Polymerelektrolyt nach einem der vorstehenden Ansprüche, bei dem das organische Polymer durch Vernetzen der an den Enden modifizierten Polyalkylenoxide erforderlichenfalls mit einem Polymerisationsinitiator und/oder einem Sensibilisator unter aktiver Bestrahlung mit Wärme, Licht oder Elektronenstrahl hergestellt wird.

5. Ein ionenleitender Polymerelektrolyt, der durch Vernetzen eines Mischpolymers zur Gewinnung eines organischen Polymers und durch Einbauen einer löslichen elektrolytischen Salzverbindung hergestellt wird, wobei das Mischpolymer enthält:
eine organische Polymerkomponente A, bei der es sich um eine organische Verbindung der Formel II handelt:
Z-[-(R¹)ₚ-(CH₂-CH(R²)-O-)ₘ-Y]ₖ (II)
worin Z für den Rest einer Alkoholverbindung und/oder Aminverbindung, R² für Wasserstoff, eine Alkyl- oder Phenylgruppe, k für eine ganze Zahl von 1 bis 12, p für eine ganze Zahl von 1 bis 220, m für eine ganze Zahl von 1 bis 240 und R¹ für eine Gruppe steht, die durch die folgende Formel III dargestellt wird: 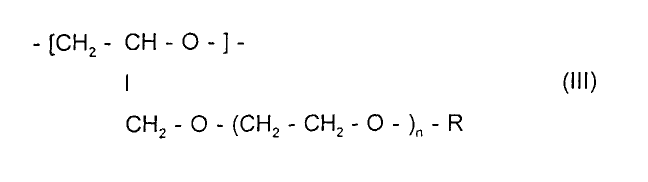 worin n für 0 oder eine ganze Zahl von 1 bis 25 und R für eine Alkyl-, Alkenyl-, Aryl- oder Alkylarylgruppe mit einer Kohlenstoffzahl von 1 bis 20 steht,
mit einer mittleren relativen Molekülmasse von 500 bis 50 000 und mit einer endständigen Gruppe Y, die eine Alkyl- oder Arylgruppe umfaßt, und
eine organische Polymerkomponente B, bei der es sich um eine organische Verbindung der Formel II handelt:
Z-[-(R¹)ₚ-(CH₂-CH(R²)-O-)ₘ-Y]ₖ (II)
worin Z der obigen Definition entspricht, R² für Wasserstoff, eine Alkyl- oder Phenylgruppe, k für eine ganze Zahl von 1 bis 12, m für eine ganze Zahl von 1 bis 240, p für eine ganze Zahl von 1 bis 220 und R¹ für eine Gruppe steht, die durch die folgende Formel III dargestellt wird: 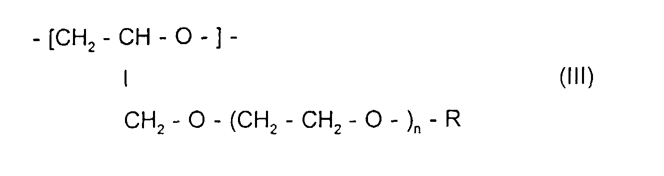 worin n für 0 oder eine ganze Zahl von 1 bis 25 und R für eine Alkyl-, Alkenyl-, Aryl- oder Alkylarylgruppe mit einer Kohlenstoffzahl von 1 bis 20 steht,
mit einer mittleren relativen Molekülmasse von 500 bis 50 000 und mit endständigen Gruppen Y, die Acryloyl- oder Methacryloylgruppen umfassen.

6. Ein ionenleitender Polymerelektrolyt nach Anspruch 5, bei dem der Anteil der organischen Polymerkomponente A an dem Mischpolymer 50 bis 98 % und der Anteil der organischen Polymerkomponente B 50 bis 2 % beträgt.

7. Ein ionenleitender Polymerelektrolyt nach Anspruch 5 oder Anspruch 6, bei dem das organische Polymer durch Vernetzen des Mischpolymers erforderlichenfalls mit einem Polymerisationsinitiator und/oder einem Sensibilisator unter aktiver Bestrahlung mit Wärme, Licht oder Elektronenstrahl hergestellt wird.

8. Ein ionenleitender Polymerelektrolyt, der durch Vernetzen eines Mischpolymers zur Gewinnung eines organischen Polymers und durch Einbauen einer löslichen elektrolytischen Salzverbindung hergestellt wird, wobei das Mischpolymer enthält:
eine organische Polymerkomponente C, bei der es sich um ein an den Enden modifiziertes Polyalkylenoxid der Formel I handelt:
Z-[-(CH₂-CH(R²)-O-)ₘ-Y]ₖ (I)
worin Z für einen Rest einer Alkoholverbindung und/oder einer Aminverbindung, R² für Wasserstoff, eine Alkyl- oder Phenylgruppe, k für eine ganze Zahl von 1 bis 12 und m für eine ganze Zahl von 1 bis 240 steht,
mit einer mittleren relativen Molekülmasse von 500 bis 50 000 und mit einer endständigen Gruppe Y, die eine Alkyl- oder Arylgruppe umfaßt, und
eine organische Polymerkomponente B, bei der es sich um eine organische Verbindung der Formel II handelt:
Z-[-(R¹)ₚ-(CH₂-CH(R²)-O-)ₘ-Y]ₖ (II)
worin Z der obigen Definition entspricht, R² für Wasserstoff, eine Alkyl- oder Phenylgruppe, k für eine ganze Zahl von 1 bis 12, m für eine ganze Zahl von 1 bis 240, p für eine ganze Zahl von 1 bis 220 und R¹ für eine Gruppe steht, die durch die folgende Formel III dargestellt wird: 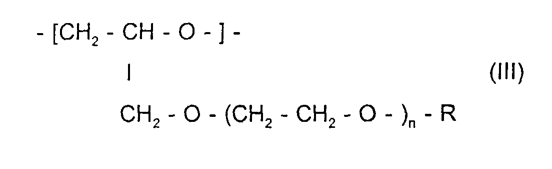 worin n für 0 oder eine ganze Zahl von 1 bis 25 und R für eine Alkyl-, Alkenyl-, Aryl- oder Alkylarylgruppe mit einer Kohlenstoffzahl von 1 bis 20 steht,
mit einer mittleren relativen Molekülmasse von 500 bis 50 000 und mit endständigen Gruppen Y, die Acryloyl- oder Methacryloylgruppen umfassen.

9. Ein ionenleitender Polymerelektrolyt nach Anspruch 8, bei dem der Anteil der organischen Polymerkomponente C an dem Mischpolymer 50 bis 98 % und der Anteil der organischen Polymerkomponente B 50 bis 2 % beträgt.

10. Ein ionenleitender Polymerelektrolyt, der durch Vernetzen eines Mischpolymers zur Gewinnung eines organischen Polymers und durch Einbauen einer löslichen elektrolytischen Salzverbindung hergestellt wird, wobei das Mischpolymer enthält:
eine organische Polymerkomponente D, bei der es sich um ein an den Enden modifiziertes Polyalkylenoxid der Formel I handelt:
Z-[-(CH₂-CH(R²)-O-)ₘ-Y]ₖ (I)
worin Z für einen Rest einer Alkoholverbindung und/oder einer Aminverbindung, R² für Wasserstoff, eine Alkyl- oder Phenylgruppe, k für eine ganze Zahl von 1 bis 12 und m für eine ganze Zahl von 1 bis 240 steht,
mit einer mittleren relativen Molekülmasse von 500 bis 50 000 und mit einer endständigen Gruppe Y, die eine Acryloyl- oder Methacryloylgruppe umfaßt, und
eine organische Polymerkomponente A, bei der es sich um eine organische Verbindung der Formel II handelt:
Z-[-(R¹)ₚ-(CH₂-CH(R²)-O-)ₘ-Y]ₖ (II)
worin Z der obigen Definition entspricht, R² für Wasserstoff, eine Alkyl- oder Phenylgruppe, k für eine ganze Zahl von 1 bis 12, m für eine ganze Zahl von 1 bis 240, p für eine ganze Zahl von 1 bis 220 und R¹ für eine Gruppe steht, die durch die folgende Formel III dargestellt wird: 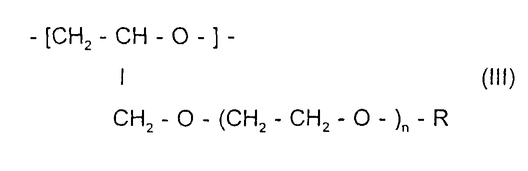 worin n für 0 oder eine ganze Zahl von 1 bis 25 und R für eine Alkyl-, Alkenyl-, Aryl- oder Alkylarylgruppe mit einer Kohlenstoffzahl von 1 bis 20 steht,
mit einer mittleren relativen Molekülmasse von 500 bis 50 000 und mit endständigen Gruppen Y, die Alkyl- oder Arylgruppen umfassen.

11. Ein ionenleitender Polymerelektrolyt nach Anspruch 10, bei dem der Anteil der organischen Polymerkomponente A an dem Mischpolymer 50 bis 98 % und der Anteil der organischen Polymerkomponente D 50 bis 2 % beträgt.

12. Ein ionenleitender Polymerelektrolyt, der durch Vernetzen eines Mischpolymers zur Gewinnung eines organischen Polymers und durch Einbauen einer löslichen elektrolytischen Salzverbindung hergestellt wird, wobei das Mischpolymer enthält:
eine organische Polymerkomponente C, bei der es sich um ein an den Enden modifiziertes Polyalkylenoxid der Formel I handelt:
Z-[-(CH₂-CH(R²)-O-)ₘ-Y]ₖ (I)
worin Z für einen Rest einer Alkoholverbindung und/oder einer Aminverbindung, R² für Wasserstoff, eine Alkyl- oder Phenylgruppe, k für eine ganze Zahl von 1 bis 12 und m für eine ganze Zahl von 1 bis 240 steht,
mit einer mittleren relativen Molekülmasse von 500 bis 50 000 und mit einer endständigen Gruppe Y, die eine Alkyl- oder Arylgruppe umfaßt, und
eine organische Polymerkomponente D, bei der es sich um ein an den Enden modifiziertes Polyalkylenoxid der Formel I gemäß obiger Definition handelt, mit einer mittleren relativen Molekülmasse von 500 bis 50 000 und mit einer endständigen Gruppe Y, die eine Acryloyl- oder Methacryloylgruppe umfaßt.

13. Ein ionenleitender Polymerelektrolyt nach Anspruch 12, bei dem der Anteil der organischen Polymerkomponente C an dem Mischpolymer 50 bis 98 % und der Anteil der organischen Polymerkomponente D 50 bis 2 % beträgt.

## Revendications

1. Electrolyte polymère conducteur d'ions, produit par une réticulation d'un polyalkylèneoxyde à terminaison modifiée, ayant la formule I ou II :
Z-[-(CH₂-CH(R²)-O-)ₘ-Y]ₖ (I)
Z-[-(R¹)ₚ-(CH₂-CH(R²)-O-)ₘ-Y]ₖ (II)
dans laquelle Z est un groupe résiduel d'un composé alcool et/ou d'un composé amine, R² est de l'hydrogène, un groupe alkyle ou un groupe phényle, k est un nombre entier allant de 1 à 12, m est un nombre entier allant de 1 à 240, p est un nombre entier allant de 1 à 220, R¹ est un groupe exprimé par la formule III qui suit : 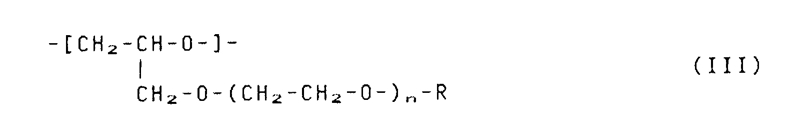 dans laquelle n est 0 ou un nombre entier allant de 1 à 25, et R et un groupe alkyle, un groupe alkényle, un groupe aryle ou un groupe alkylaryle ayant un nombre d'atomes de carbone allant de 1 à 20,
et ayant un poids moléculaire moyen compris dans la plage allant de 500 à 50000, afin de produire un polymère organique, et par l'introduction d'un composé de sel électrolytique soluble dans le polymère organique, les groupes terminaux Y étant en partie un groupe alkyle ou aryle et les groupes terminaux restants étant un groupe acryloyle ou méthacrylolyle.

2. Electrolyte polymère conducteur d'ions selon la revendication 1, dans lequel le groupe R² substituant est de l'hydrogène ou un groupe méthyle.

3. Electrolyte polymère conducteur d'ions selon la revendication 1 ou la revendication 2, dans lequel le rapport des groupes terminaux Y comprenant des groupes alkyle ou aryle est compris dans la plage allant de 50 à 98 % et le rapport des groupes terminaux Y comprenant des groupes acryloyle ou méthacryloyle est compris dans la plage allant de 2 à 50 %.

4. Electrolyte polymère conducteur d'ions selon l'une quelconque des revendications précédentes, dans lequel le polymère organique est préparé par une réticulation des oxydes de polyalkylène à terminaison modifiée, si nécessaire, avec un initiateur de polymérisation et/ou un sensibilisateur, sous les radiations d'un rayonnement actif de chaleur, de lumière ou d'un faisceau d'électrons.

5. Electrolyte polymère conducteur d'ions, produit par une réticulation d'un polymère mélangé afin de produire un polymère organique et par l'introduction d'un composé de sel électrolytique soluble, le polymère mélangé contenant :
un composant polymère organique A étant un composé organique de la formule II :
Z-[-(R¹)ₚ-(CH₂-CH(R²)-O-)ₘ-Y]ₖ (II)
dans laquelle Z est le résidu d'un composé d'alcool et/ou d'un composé d'amine, R² est de l'hydrogène, un groupe alkyle ou un groupe phényle, k est un nombre entier allant de 1 à 12, p est un nombre entier allant de 1 à 220, m est un nombre entier allant de 1 à 240, R¹ est un groupe exprimé par la formule III qui suit : 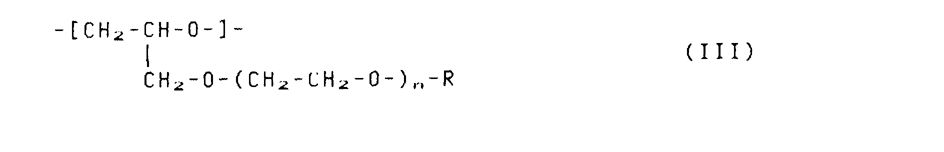 dans laquelle n est égal à 0 ou à un nombre entier allant de 1 à 25, et R est un groupe alkyle, un groupe alkényle, un groupe aryle ou un groupe alkylaryle ayant un nombre d'atomes de carbone allant de 1 à 20,
présentant un poids moléculaire moyen compris dans la plage allant de 500 à 50000 et ayant un groupe terminal Y comprenant un groupe alkyle ou aryle, et
un composant polymère organique B étant un composé organique de la formule II :
Z-[-(R¹)ₚ-(CH₂-CH(R²)-O-)ₘ-Y]ₖ (II)
dans laquelle Z est tel que défini ci-dessus, R² est de l'hydrogène, un groupe alkyle ou un groupe phényle, k est un nombre entier allant de 1 à 12, m est un nombre entier allant de 1 à 240, p est un nombre entier allant de 1 à 220, R¹ est un groupe exprimé par la formule III qui suit : 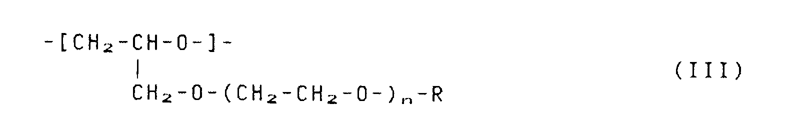 dans laquelle n est égal à 0 ou à un nombre entier allant de 1 a 25, et R est un groupe alkyle, un groupe alkényle, un groupe aryle ou un groupe alkylaryle ayant un nombre d'atomes de carbone allant de 1 à 20,
présentant un poids moléculaire moyen compris dans la plage allant de 500 à 50000 et ayant des groupes terminaux Y comprenant des groupes acryloyle ou méthacryloyle.

6. Electrolyte polymère conducteur d'ions selon la revendication 5, dans lequel le rapport dudit composant polymère organique A contenu dans le polymère mélangé est compris dans la plage allant de 50 à 98 % et le rapport du composant polymère organique B est compris dans la plage allant de 50 à 2 %.

7. Electrolyte polymère conducteur d'ions selon la revendication 5 ou la revendication 6, dans lequel le polymère organique est préparé par une réticulation du polymère mélangé, si nécessaire, avec un initiateur de polymérisation et/ou un sensibilisateur, sous une irradiation d'un rayonnement actif de chaleur, de lumière ou d'un faisceau d'électrons.

8. Electrolyte polymère conducteur d'ions, produit par une réticulation d'un polymère mélangé afin de produire un polymère organique et par l'introduction d'un composé de sel électrolytique soluble, le polymère mélangé contenant :
un composant polymère organique C étant un polyalkylèneoxyde à terminaison modifiée ayant la formule I :
Z-[-(CH₂-CH(R²)-O-)ₘ-Y]ₖ (I)
dans laquelle Z est un résidu d'un composé d'alcool et/ou d'un composé d'amine, R² est de l'hydrogène, un groupe alkyle ou un groupe phényle, k est un nombre entier allant de 1 à 12, m est un nombre entier allant de 1 à 240,
présentant un poids moléculaire moyen compris dans la plage allant de 500 à 50000 et ayant un groupe terminal Y comprenant un groupe alkyle ou aryle,
un composant polymère organique B étant un composé organique de la formule II :
Z-[-(R¹)ₚ-(CH₂-CH(R²)-O-)ₘ-Y]ₖ (II)
dans laquelle Z est tel que défini ci-dessus, R² est de l'hydrogène, un groupe alkyle ou un groupe phényle, k est un nombre entier allant de 1 à 12, m est un nombre entier allant de 1 à 240, p est un nombre entier allant de 1 à 220, R¹ est un groupe exprimé par la formule III qui suit : 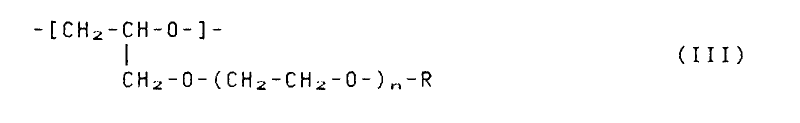 dans laquelle n est égal à 0 ou un nombre entier allant de 1 à 25, et R et un groupe alkyle, un groupe alkényle, un groupe aryle ou un groupe alkylaryle ayant un nombre d'atomes de carbone allant de 1 à 20,
présentant un poids moléculaire moyen compris dans la plage allant de 500 à 50000 et ayant des groupes terminaux Y comprenant des groupes acryloyle ou méthacrylolyle.

9. Electrolyte polymère conducteur d'ions selon la revendication 8, dans lequel le rapport dudit composant polymère organique C dans le polymère mélangé est compris dans la plage allant de 50 à 98 % et le rapport du composant polymère organique B est compris dans la plage allant de 50 à 2 %.

10. Electrolyte polymère conducteur d'ions, produit par une réticulation d'un polymère mélangé afin de produire un polymère organique et par l'introduction d'un composé de sel électrolytique soluble, le polymère mélangé contenant : un composant polymère organique D étant un polyalkylèneoxyde à terminaison modifiée ayant la formule I :
Z-[-(CH₂-CH(R²)-O-)ₘ-Y]ₖ (I)
dans laquelle Z est un résidu d'un composé d'alcool et/ou d'un composé amine, R² est de l'hydrogène, un groupe alkyle ou un groupe phényle, k est un nombre entier allant de 1 à 12, m est un nombre entier allant de 1 à 240,
présentant un poids moléculaire moyen compris dans la plage allant de 500 à 50000 et ayant un groupe terminal Y comprenant un groupe acryloyle ou méthacryloyle, et
un composant polymère organique A étant un composé organique de la formule II :
Z-[-(R¹)ₚ-(CH₂-CH(R²)-O-)ₘ-Y]ₖ (II)
dans laquelle Z est tel que défini ci-dessus, R² est de l'hydrogène, un groupe alkyle ou un groupe phényle, k est un nombre entier allant de 1 à 12, m est un nombre entier allant de 1 à 240, p est un nombre entier allant de 1 à 220, R¹ est un groupe exprimé par la formule III qui suit : 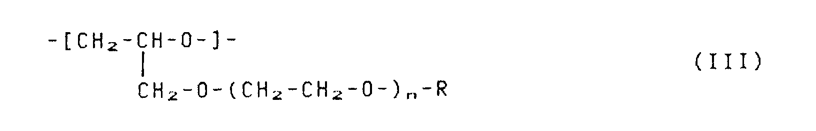 dans laquelle n est 0 ou un nombre entier allant de 1 à 25, et R et un groupe alkyle, un groupe alkényle, un groupe aryle ou un groupe alkylaryle ayant un nombre d'atomes de carbone allant de 1 à 20,
présentant un poids moléculaire moyen compris dans la plage allant de 500 à 50000 et ayant des groupes terminaux Y comprenant des groupes alkyle ou aryle.

11. Electrolyte polymère conducteur d'ions selon la revendication 10, dans lequel le rapport dudit composant polymère organique A dans le polymère mélangé est compris dans la plage allant de 50 à 98 % et le rapport du composant polymère organique D est compris dans la plage allant de 50 à 2 %.

12. Electrolyte polymère conducteur d'ions, produit par une réticulation d'un polymère mélangé afin de produire un polymère organique et par l'introduction d'un composé de sel électrolytique soluble, le polymère mélangé contenant :
un composant polymère organique C étant un polyalkylèneoxyde à terminaison modifiée ayant la formule I :
Z-[-(CH₂-CH(R²)-O-)ₘ-Y]ₖ (I)
dans laquelle Z est un résidu d'un composé d'alcool et/ou d'un composé d'amine, R² est de l'hydrogène, un groupe alkyle ou un groupe phényle, k est un nombre entier allant de 1 à 12, m est un nombre entier allant de 1 à 240,
présentant un poids moléculaire moyen compris dans la plage allant de 500 à 50000 et ayant un groupe terminal Y comprenant un groupe alkyle ou aryle, et
un composant polymère organique D étant un polyalkylèneoxyde à terminaison modifiée ayant la formule I telle que définie ci-dessus, présentant un poids moléculaire moyen compris dans la plage allant de 500 à 50000 et ayant un groupe terminal Y comprenant un groupe acryloyle ou méthacryloyle.

13. Electrolyte polymère conducteur d'ions selon la revendication 12, dans lequel le rapport dudit composant polymère organique C dans le polymère mélangé est compris dans la plage allant de 50 à 98 % et le rapport du composant polymère organique D est compris dans la plage allant de 50 à 2 %.
